# EUROPEAN PATENT APPLICATION

(11) **EP 0 596 709 A1**
(43) Date of publication of application: **11.05.1994**
(21) Application number: 93308770.2
(22) Date of filing: 03.11.1993
(51) Int. Cl.: G02B 5/08, G02B 7/182

(54) **Method of manufacturing a rotary optical scanwheel**

(30) Priority: 03.11.1992 US 970739
(71) Applicant: Hughes Aircraft Company, Los Angeles, California 90045-0066 (US)
(72) Inventor: Parker, Merle, Oceanside, California 92056 (US); Morrison, Don, Fairport, New York 14450 (US)
(74) Representative: Colgan, Stephen James

(57) **Abstract**

A method of manufacturing a rotary optical scanwheel assembly includes the steps of mounting a multi-faceted scanwheel to a shaft using a bearing that allows the scanwheel to rotate about the shaft, shielding the bearing during the machine finishing of the facets of the scanwheel and thereafter capping the bearing during the facet coatings process.

## Description

### BACKGROUND OF THE INVENTION

The present invention generally relates to a method of manufacturing a rotary optical scanwheel assembly and, in particular, relates to one such method including the step of machine finishing the facets of the multi-faceted scanwheel subsequent to mounting the scanwheel on the bearings thereof.

Rotary optical scanner assembly typically include a multifaceted scanwheel mounted on a shaft for rotation via a bearing. Preferably, in one typical application, the scanwheel rotates at high speed in the path of infrared light to provide a scanning function. In such an application, the scanwheel rotates at a constant controlled speed. Further, in such applications, the facets of the scanwheel must be very precisely oriented relative to the axis of rotation of the scanwheel. In fact, it is preferred that the facets be very precisely oriented in both the azimuth and the elevation planes of the incoming infrared radiation.

In general, scanwheels are manufactured by first optically finishing the multi-faceted scanwheel and then affixing the scanwheel to a shaft such that the scanwheel rotates about the shaft. Such an assembly method has the major drawback of requiring that the mounting of the scanwheel to the shaft must be performed very accurately. That is, if the facets of the scanwheel are not properly aligned with respect to its rotational axis the scanwheel becomes less efficient in scanning the incoming light. As a result, there are almost inherently elevation angle errors in the assembled scanwheel. Such elevation angle errors result from either elevation angle machining errors, bearing pair angular runout or bearing insertion errors, i. e., where the spin axis is not aligned with the optical axis.

Consequently, it is highly desirable to provide a method for manufacturing scanwheel assemblies that ensures the alignment of the facets of the scanwheel to its rotational axis.

### SUMMARY OF THE INVENTION

Accordingly, it is one object of the present invention to provide a method of manufacturing a rotary optical scanwheel assembly that substantially completely overcomes the above-recited drawbacks of the conventional methods of manufacturing such scanwheel assemblies.

This object is accomplished, at least in part, by a method of manufacturing that includes the mountlig of the scanwheel on a shaft and thereafter both mechanically and optically finishing the facets thereof.

Other objects and advantages of the present invention will become apparent to those skilled in the art from the following detailed description of the invention read in conjunction with the attached claims and the drawing appended hereto.

### BRIEF DESCRIPTION OF THE DRAWING

The drawing, not drawn to scale, includes:
Figure 1 which is a cross-sectional view of one embodiment of a scanwheel assembly to which the present method may be particularly adapted;
Figure 2 is a cross-sectional view of the scanwheel assembly shown in Figure 1 during a subsequent stage of the present method; and
Figure 3 is a cross-sectional view of the scanwheel assembly shown in Figures 1 and 2 during a further stage of the present method.

### DETAILED DESCRIPTION OF THE INVENTION

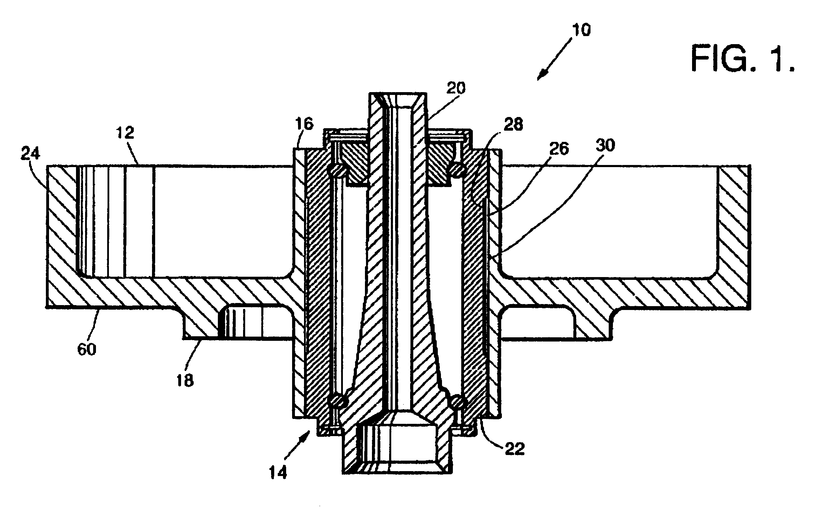

A scanwheel assembly, generally indicated at 10 in Figure 1, includes a multi-faceted scanwheel 12 having an axial opening 14, or bore, through a hub 16. In addition, in the preferred embodiment, the scanwheel 12 includes an integral encoder disk flange 18. The scanwheel assembly 10 further includes a shaft 20 about which the scanwheel 12 rotates via a shaft bearing means 22.

In one embodiment of the present method the facets 24 of the scanwheel 12, which is, for example, cast from aluminum, are initially machined to close to the final dimensions thereof. Typically, the facets 24 are rough finished using conventional techniques such as, for example, by use of a computer numerical controlled milling machine. Typically, the facets 24 are finished to about 0.005 of an inch of the final dimension. In addition, the axial opening 14 through the scanwheel 12 is precision machined to provide an interference fit with the shaft bearing means 22. Subsequently, the bearing shaft means 22 is mounted in the axial opening 14. Although a single cartridge bearing is shown, other types of bearings such as, separate single row bearings can also be employed. In one preferred embodiment, the shaft bearing means 22 is adapted to provide a thermal strain isolation slot 26 between a major portion of the outer surface 28 of the shaft bearing means 22 and the mating surface 30 of the axial opening 14 of the scanwheel 12.

Following the mounting of the scanwheel on the shaft 20, bearing raceway shields 32 are provided to protect the shaft bearing means 22 from debris caused by subsequent processes as further described herein.

After the bearing shaft 20 is affixed to the scanwheel 12 and with the bearing raceway shields 32 in place, the facets 24 of the scanwheel 12 are finished in both the azimuthal and elevation planes. In one particular embodiment, the shaft 20 is fixed and the scanwheel assembly is rotated while the optical encoder disk flange 18 and the flat area 60 adjacent to the encoder disk 18 is machined. As a result, the encoder disk 18 and adjacent flat area 60 is true to the shaft bearing 22. The scanwheel assembly 10 is now clamped or otherwise fixtured against the flat area 60 and the facets 24 are optically finished. As a result, the surfaces,i. e., the facets 24 and the encoder disk flange 18, so machined will always be true with respect to the shaft bearing 22 and hence, will rotate about the shaft 20 in the same position without wobble or misalignment.

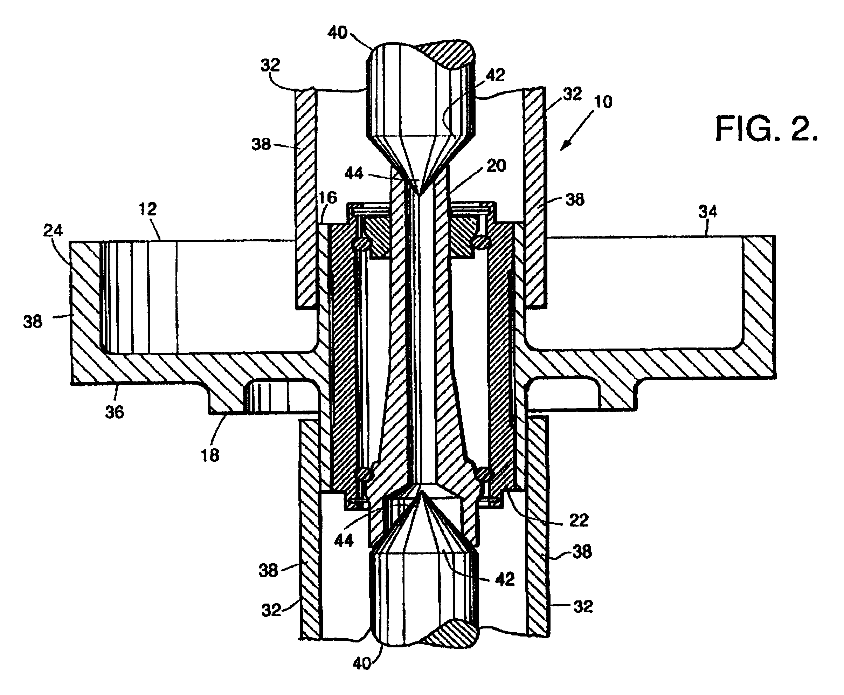

Thereafter the top and bottom surfaces, 34 and 36, respectively, of the scanwheel 12 are machine finished. The bearing raceway shields 32, shown in Figure 2, are disposed to prevent contamination of the bearing 22 during the machine finishing of the facets 24 and the surfaces, 34 and 36, while nonetheless allowing the scanwheel 12 to rotate freely on the bearing 22. The bearings raceway shields 32 preferably include an internal bore 38 having an inside diameter about the same as the outside diameter of the hub 16 of the scanwheel 12. The bearing raceway shields 32 further include means 40 for holding the shaft 20 on center with respect to the shields 32 themselves. In one embodiment, the means 40 includes rods 42 extending axially through the shields 32. The rods 42 are provided with cone-like ends 44 dimensioned to fit into the shaft 20 and prevent the rotation thereof during the machining process. Thereafter, the scanwheel 12 is clamped to a surface, 34 or 36, which has been machined with respect to the bearing spin axis and the facets 24 are machine finished. Preferably, the facets 24 are finished by diamond machining or some other conventional technique for finishing the surface of the material.

At this stage, the encoder disk flange 18 may also be machine finished using the same or similar methods. As a result, the surfaces, i. e., the facets 24 and the encoder disk flange 18, so machined will always be true with respect to the shaft bearing 22 and hence will rotate about the shaft 20 in the same position without wobble or misalignment.

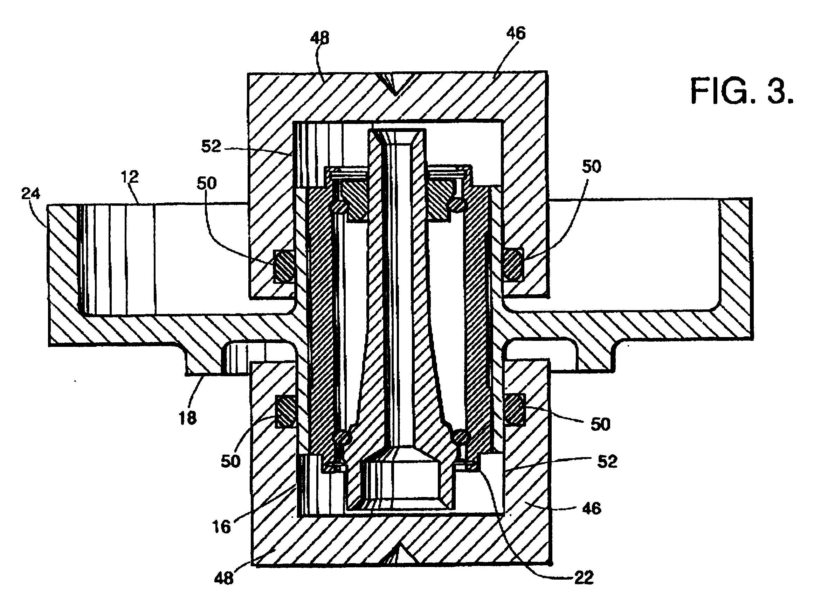

The scanwheel assembly 10, now having its facets 24 finished, is removed from the tooling and the bearing raceway shields 32 are removed. Next, sealing means 46 are placed over both ends of the hub 16. In the preferred embodiment, the hub 16 is cylindrical and allows highly effective seals to be utilized. In the particular implementation shown in Figure 3, the sealing means 46 include caps 48, each cap 48 having at least one O-ring 50 disposed on the inside surface 52 thereof to ensure a moisture and particle tight seal between the cap 48 and the shaft bearings 22 of the scanwheel assembly 12. Subsequent to the sealing means 46 being applied, the scanwheel 12 is optically coated, for example, by use of a conventional coating chamber. In addition to protecting against conventional debris and contamination, the sealing means 46, advantageously, also allow the final optical coating process to be performed within a vacuum chamber without damage to the shaft bearing 22 or contamination of the coating chamber by any bearing lubricant.

The facets 24 of the finished scanwheel assembly 10 inherently then are fully aligned with respect to the shaft 20. Hence, the facets 24 can be finished both in the azimuth and elevation plane in a very repeatable fashion such that every resulting scanwheel assembly 10 is interchangeable with every other scanwheel assembly 10 finished by the same method. An additional advantage provided by the present method of manufacture is that the optical encoder disk flange 18, which is used in the velocity control of the scanwheel assembly 10, can be machined at the same time as the facet 24. As a result, the out of plane wobble of the encoder disk 18 is greatly reduced and thus the signal to noise ratio of the overall scanwheel assembly 10 is improved.

The present method of manufacturing a scanwheel has been described with respect to an exemplary embodiment which is not deemed to be limited as other designs and method steps may be made by persons skilled in the art without departing from the spirit and scope hereof. Hence the present invention is deemed limited by the appended claims and the reasonable interpretation hereof.

## Claims

1. A method of manufacturing a bearing mounted rotary optical scanner, said method comprising the steps of:
machining the facets of a scanwheel to approximate the final dimensions thereof, said scanwheel having an axial hub having an opening therethrough;
installing bearings within said hub;
affixing a bearing shaft to said scanwheel such that said scanwheel rotates about said shaft via said bearings;
machine finishing said facets;
sealing said bearings; and
optically finishing said facets of said scanwheel.

2. The method as claimed in Claim 1 further comprising the step of:
removing said bearing seal subsequent to said optical finishing step.

3. The method as claimed in Claim 1, further comprising the step of:
machining, before sealing said bearings, optical facets and a surface for receiving an optical encoder means.

4. The method as claimed in Claim 1 wherein said bearing shaft affixing step includes providing an interference fit between said scanwheel and said shaft bearing means.

5. The method as claimed in Claim 1 wherein said affixing step includes adapting said shaft bearing means to provide a thermal strain isolation slot between said shaft bearing means and said axial opening.

6. The method as claimed in Claim 1 wherein said facet finishing step includes finishing said facets in both the azimuthal plane and the elevation plane with respect to the spin axis of said previously installed bearing.

7. The method as claimed in Claim 1 wherein said sealing step includes providing bearing raceway shields having means for holding said shaft on center.

8. The method as claimed in Claim 7 wherein said sealing step further includes providing means for holding having cone-like ends extending through the axis of said shields.

9. The method as claimed in Claim 1 wherein said facet finishing step includes diamond machining said facets.

10. The method as claimed in claim 1 further including the step of machining an encoder disk flange in said scanwheel with respect to the spin axis of said previously installed bearing.
